Europäisches Patentamt

European Patent Office

Office européen des brevets

(19)

(11) Publication number: **0 440 457 A2**

# (12) EUROPEAN PATENT APPLICATION

(21) Application number: 91300735.7

(51) Int. Cl.⁵: **G06F 13/28**

(22) Date of filing: 30.01.91

(30) Priority: 31.01.90 US 472564

(43) Date of publication of application:
07.08.91 Bulletin 91/32

(84) Designated Contracting States:
DE FR GB IT

(71) Applicant: Hewlett-Packard Company
Mail Stop 20 B-O, 3000 Hanover Street
Palo Alto, California 94304 (US)

(72) Inventor: Bassett, Carol E.
1067 November Drive
Cupertino, California 95014 (US)
Inventor: Campbell, Robert G.
2771 Pruneridge Avenue
Santa Clara, California 95051 (US)
Inventor: Lang, Marilyn J.
647 Escuela Place
Milpitas, California 95035 (US)
Inventor: Begur, Sridhar
3686 Sloperview Drive
San Jose, California 95148 (US)

(74) Representative: Colgan, Stephen James et al
CARPMAELS & RANSFORD 43 Bloomsbury
Square
London WC1A 2RA (GB)

(54) **Burst mode read implementation.**

(57)    A microcomputer system memory controller architecture and method permits high speed access to data in the system memory (102), allowing the system memory (102) to operate in a burst mode. The architecture and method utilizes a system memory controller (108, 208) capable of performing the addressing of the system memory (102) without constant supervision by the microprocessor (106, 206). The microprocessor (106, 206) and the system memory (102) electrically communicate by way of a host bus (204). The memory controller (108, 208) generates second addresses corresponding to data locations in system memory (102) upon receipt of the initial address of a set of first addresses from the microprocessor (106, 206). Accordingly, the microprocessor (106, 206) can access data in the system memory (102) at an extremely fast rate when attempting to read in a burst mode. High speed access is accomplished without the need for an external cache.

EP 0 440 457 A2

FIG.2

## BURST MODE READ IMPLEMENTATION

BACKGROUND OF THE INVENTION

I. FIELD OF THE INVENTION

The present invention relates to system memory in a microcomputer system, and more particularly, to a system memory controller architecture and method for causing access to data locations in the system memory at high speeds in a burst mode.

II. RELATED ART

Computer systems have traditionally been classified into three groups in the following order in terms of size: mainframe computers, minicomputers, and microcomputers. Size in this context refers to memory size and the number of users as well as the associated management sophistication. Moreover, computer designers of the different computer sizes have varying design priorities, relating to complexity, speed, quantity of data, cost, and the consumer.

Until the invention at hand, a burst mode data transfer from the system memory in a computer directly to the central processing unit was considered a sophisticated computer concept for high end computers. Utilization of this concept was limited to computers on the larger and expensive end of the computer spectrum, namely mainframes and minicomputers, which require processing of large quantities of data at high speeds. However, burst mode data transfers could be found internally to microprocessor chip architectures in relation to an internal cache. Thus, although mainframe, minicomputer, and microchip designers were predisposed with the concept of burst mode, microcomputer designers were not so predisposed because of the lack of a need.

As the microcomputer industry has evolved, it has become necessary to achieve greater processing speeds in microcomputers which have been progressively used more for compute-intensive applications. These applications include, for example, high resolution graphics displays, high performance computer automated design (CAD) workstations, high speed local area networks (LAN), and recently the new Extended Industry Standard Architecture (EISA) peripherals which are being developed to handle 32-bit burst data transfers at up to 33 megabytes per second. As a result, microcomputer designers, who deal regularly with interfacing discrete computer components are seeking ways to increase the speed of component interaction. It has been realized that most of the microcomputer system's time is utilized during computation or during the movement of data between the system memory and the central processing unit.

Aware of the needs of the rapidly expanding microcomputer industry, microchip designers have designed and developed a microprocessor which can operate on data externally in a burst mode. This microprocessor is the Intel 80486 microprocessor (manufactured by Intel Corporation, California, USA) having an internal 8 Kilobyte internal cache. The Intel 80486 microprocessor was developed to improve the Intel 80386 microprocessor design and to operate externally in a burst mode. i486 Microprocessor, Intel Corporation, April 1989, Order Number 240440-001, which is incorporated herein by reference.

Using conventional system memory comprised generally of DRAMs in conjunction with the Intel microprocessors has not, in the opinion of the inventors, fully exploited the speed capabilities of the microprocessors because of the limited speed of such memories. To maximize the data exchange rate between system memory and the Intel 80486 microprocessor, microcomputer designers have been quick to interface external caches with the Intel 80486 microprocessor to more readily transport system memory data to it. Several 80486 machines have been announced by Apricot and Advanced Logic Research having an Intel 80486 microprocessor which is used in conjunction with an external cache.

However, addition of an external cache to the Intel 80486 microprocessor to improve speed has disadvantages. Acquiring data from an external cache is more time consuming than acquiring it from the internal cache of the 80486 microprocessor. An external cache needs to be situated physically near the 80486 microprocessor. The external cache takes up valuable, limited real estate in the microcomputer. Moreover, the external cache represents an additional cost.

Until the present invention disclosed below, no microcomputer in the marketplace or elsewhere has been capable of high speed transfers of data in a burst mode from system memory to the microprocessor without the need for an external cache connected to the microprocessor. In this regard, see N. Baran, "EISA Arrives," Byte Magazine, v. 14, number 12, November 1989 (cover story), which is incorporated herein by reference.

## SUMMARY OF THE INVENTION

Representing a substantial effort by several microcomputer designers and engineers over a year span, the present invention overcomes the previously mentioned problems and deficiencies in the prior art related to providing a burst mode data transfer from system memory to a microprocessor by providing a high performance system memory controller architecture.

One embodiment of the present invention provides a system memory controller architecture and method for high speed data retrieval from a system memory in a microcomputer. The present invention comprises a system memory connected to a system memory controller for addressing the system memory and for causing access to data locations in system memory during a burst mode. The system memory controller while in a burst mode, after receiving a first address sent from a microprocessor, generates second addresses corresponding to data locations to be accessed in system memory. As a result of the novel architecture and method, data in system memory is accessed faster because the microprocessor is freed from multiple addressing which is conventionally necessary to obtain multiple words of data. The chore of addressing is allocated to the memory controller. Furthermore, an external cache is not needed between the microprocessor and system memory to achieve high speeds.

In another embodiment of the present invention, a high speed system memory controller architecture is under the supervision of an 80486 microprocessor via a host bus. Moreover, a system memory operates under the control of the system memory controller and consists of dynamic random access memories. Conventional microcomputer components can be used to construct the embodiment translating into an affordable system for a microcomputer consumer.

Still another embodiment of the present invention comprises a high speed memory controller architecture with a system memory having multiple 64-bit buses. Two 32-bit bidirectional latching transceivers are connected to each 64-bit bus to transmit data from each bus to the 32-bit host bus. Because the buses are 64 bits wide, fewer reads from the system memory are required. Moreover, the multiple bus configuration helps to provide extremely fast data acquisition by minimizing the effects of capacitance loading which can inhibit data propagation at high speeds.

A further embodiment of the present invention is a method for generating second addresses pertaining to system memory locations to be accessed from the initial address of the set of first addresses transmitted from a microprocessor to the system memory controller architecture. The method helps to provide high speed performance by not waiting for all of the first addresses from the microprocessor before proceeding with the addressing of system memory locations.

Yet another method is disclosed for high speed data retrieval from a system memory having dual 64-bit system memory buses connected in parallel to a 32-bit host bus. The method includes the steps of selecting one of the 64-bit system memory buses, retrieving 64 data bits from the 64-bit system memory bus, transmitting a first set of 32 data bits of the 64 data bits onto the 32-bit host bus, and transmitting a second set of 32 data bits of the previously mentioned 64 data bits onto the 32-bit host bus. The method enables the system memory to transfer data at high speeds in a burst mode to the host bus.

Further objects and advantages of the present invention will become apparent to one skilled in the art upon examination of the following drawings and detailed description. It is intended that any additional objects and advantages be incorporated herein.

## BRIEF DESCRIPTION OF THE DRAWINGS

The present invention as defined in the claims can be better understood with reference to the text and to the following drawings.

Figure 1 is a high level block diagram representation of the preferred embodiments of the present invention;

Figure 2 is an intermediate level block diagram representation of Figure 1 ;

Figure 3 illustrates in more detail the system memory 120 of Figure 1 ; and

Figure 4 shows in more detail the system memory controller 110 of Figure 1.

## DESCRIPTION OF PREFERRED EMBODIMENT

### I. OVERVIEW

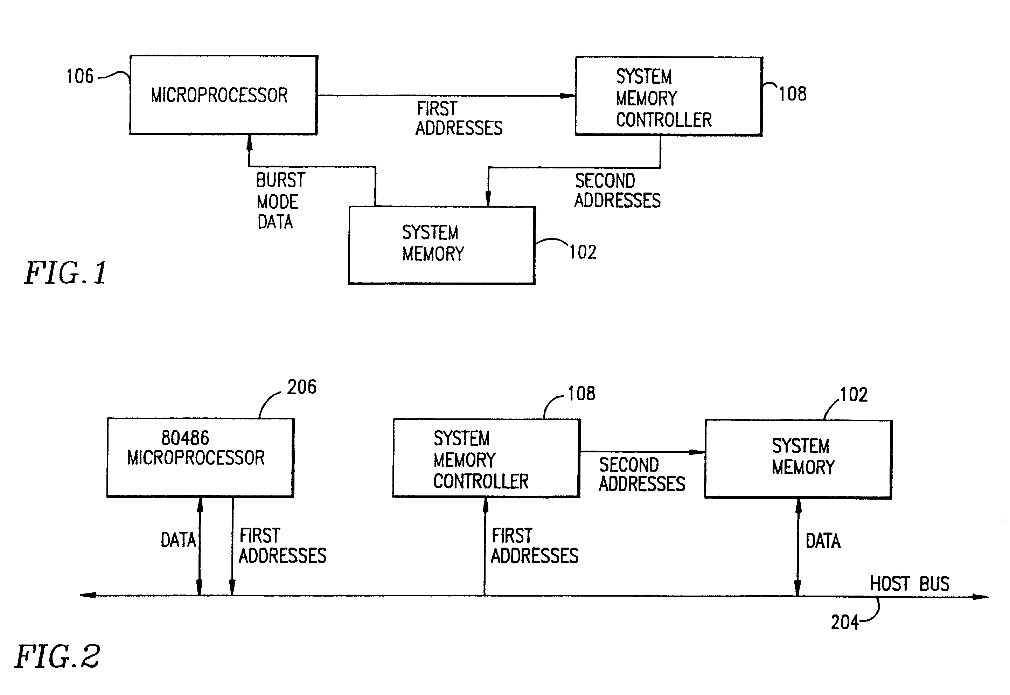

The present invention in its broadest sense is illustrated in Figure 1. A system memory controller controls an external system memory 102. The system memory controller 108 and method causes high speed data transfers in a burst mode to the microprocessor 106 from data locations in system memory 102. A burst mode in this context refers to high speed consecutive data transfers.

The microprocessor 106 as shown in Figure 1 can be any microprocessor of present or future conventional design which is capable of reading from external microcomputer components in a burst mode. The present invention which includes the apparatus of the system memory controller 108 and a method complements the burst mode capability of the microprocessor 106 by enabling the system memory 102 to transfer data in a burst mode at a high speed to the microprocessor 106. The present invention provides for high speed data transfers without the need for the insertion of an external cache between the microprocessor 106 and the system memory 102. It should be noted, however, that an embodiment is envisioned using the present invention interfaced with an external cache to achieve an even faster microcomputer architecture.

In operation when the microprocessor 106 wishes to retrieve data from the system memory 102, the microprocessor 106 begins to transmit first addresses to the system memory controller 108. These so-called first addresses are accompanied by the requisite control signals, such as an address strobe (ADS) for each address. Upon receipt of the initial address of the set of first addresses from the microprocessor 106, the memory controller 108 takes over the addressing scheme to the system memory 102 by generating second addresses corresponding to system memory data locations to be accessed. The second addresses include the required control signals to operate the system memory 102. The assumption of the addressing scheme by the system memory controller 108 permits the high speed data retrieval from the system memory 102 without having to wait for all of the first addresses from the 80486 microprocessor 206. Conventional architectures would require the system memory controller 208 to wait for a first address from the Intel 80486 microprocessor 206 in order to retrieve each data transmission from the system memory 102, resulting in less time efficiency.

Another illustration of the present invention is found at Figure 2. In Figure 2, an Intel 80486 microprocessor 206 is utilized as the microprocessor. It communicates the first addresses to the system memory controller 108 through the a host bus 204 and receives data at high speeds in a burst mode from the system memory 102 through the host bus 204. Further, system memory controller 108 directly communicates the second addresses to the system memory 102.

The Intel 80486 microprocessor 206 is designed to be able to read from external microcomputer components in a burst mode. The Intel 80486 microprocessor 206 is capable of reading 32 data bits at a time, i.e., double words, or dwords. The present invention utilizes the burst mode capability of the Intel 80486 microprocessor 206 to its fullest capacity. It enables the system memory 102 by operation of the system memory controller 108 to communicate dwords in a burst mode to the Intel 80486 microprocessor 206 through the host bus 204 at nearly the speed of the Intel 80486 microprocessor 206. Unlike conventional technology, the time for data acquisition is optimize by having the system memory controller 108 take over the addressing scheme after receiving only the initial address of the set of first addresses from the Intel 80486 microprocessor 206. Furthermore, the embodiment of Figure 2 illustrates that conventional microcomputer components can be used to construct the present invention, translating into an affordable embodiment for the microcomputer consumer.

## II. SYSTEM MEMORY CONTROLLER ARCHITECTURE

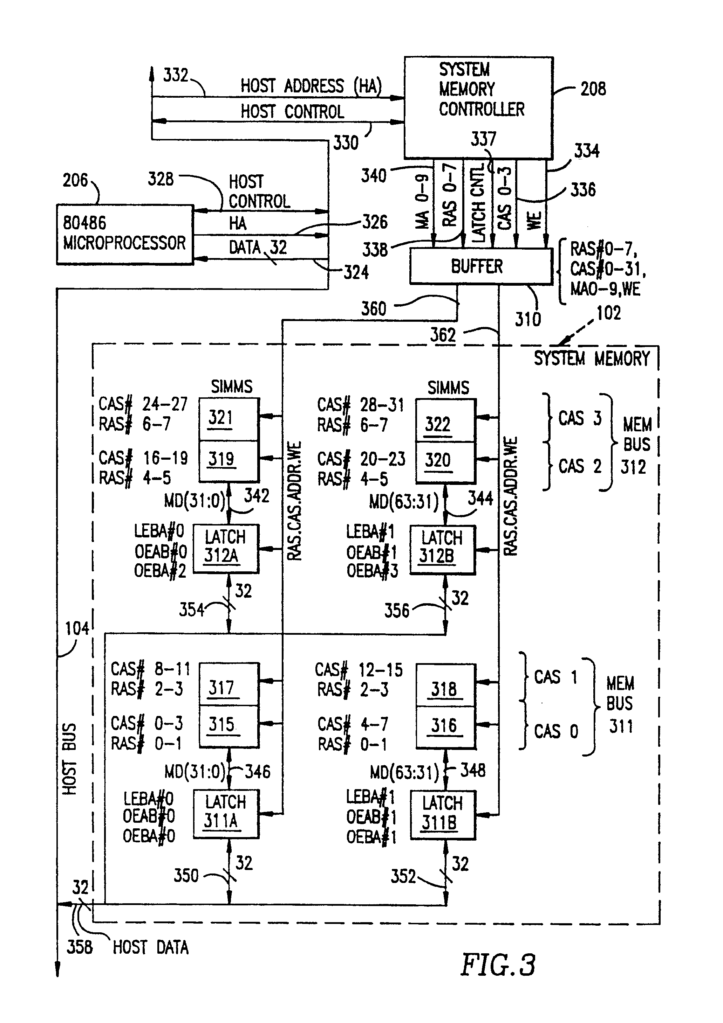

Figure 3 illustrates in more detail a further embodiment of Figures 1 and 2. Specifically, the system memory 102 is shown in detail. Moreover, the system memory controller 108 controls the system memory 102 via a buffer 310. The system memory 102 is designed to transfer 1 dword or alternatively to operate in a burst mode by transferring 2 or 4 dwords consecutively. The system memory 102 could transfer 3 dwords, but in operation it does not due to the operation of the Intel 80486 microprocessor 206 which reads only 1, 2, and 4 dwords.

With reference to Figure 3, the system memory 102 has dual 64-bit system memory buses 311 and 312 connected in parallel to a host bus 204 via host data bus 358. Data from the system memory 102 can be transferred onto a host bus 204 and then ultimately to the Intel 80486 microprocessor 206 at high speeds in a burst mode via host data bus 358, host bus 204, and bus 324. Significantly, the host bus 204 can receive data through host data bus 358 from the system memory 102 at speeds of up to nearly 50 megabytes per second.

The system memory can be comprised of dynamic random access memory (DRAM) units. Notwithstanding the use of DRAMs, which are relatively slow compared to cache memories, the microcomputing system achieves extremely fast, data transmission speeds from the external system memory 102 to the Intel 80486 microprocessor 206.

The DRAM for each system memory bus 311 and 312 is connected on SIMM (single in-line memory module) sockets 315-312. System memory bus 311 includes SIMM sockets 315-318 and a pair of latching transceivers 311A and 311B. The DRAMs connected to SIMM sockets 315 and 317 communicate data to the latching transceiver 311A via a 32-bit bus 346. The DRAM connected to SIMM sockets 316 and 318 communicate data to the latching transceiver 311B via a 32-bit bus 348.

System memory bus 312 includes SIMM sockets 319-322 and a pair of latching transceivers 312A and 312B. The DRAMs connected to SIMM sockets 319 and 321 communicate data to the latching transceiver 312A via a 32-bit bus 342. The DRAMs connected to SIMM sockets 320 and 322 communicate data to the latching transceiver 312B via a 32-bit bus 344. Furthermore, all of the 32-bit latching transceivers 311A, 311B, 312A, and 312B are connected to the same 32-bit data lines of the host bus 204 via host data bus 358 and respective 32-bit buses 350, 352, 354, and 356. Optimally, each SIMM socket services a double density SIMM, which carries two DRAM banks.

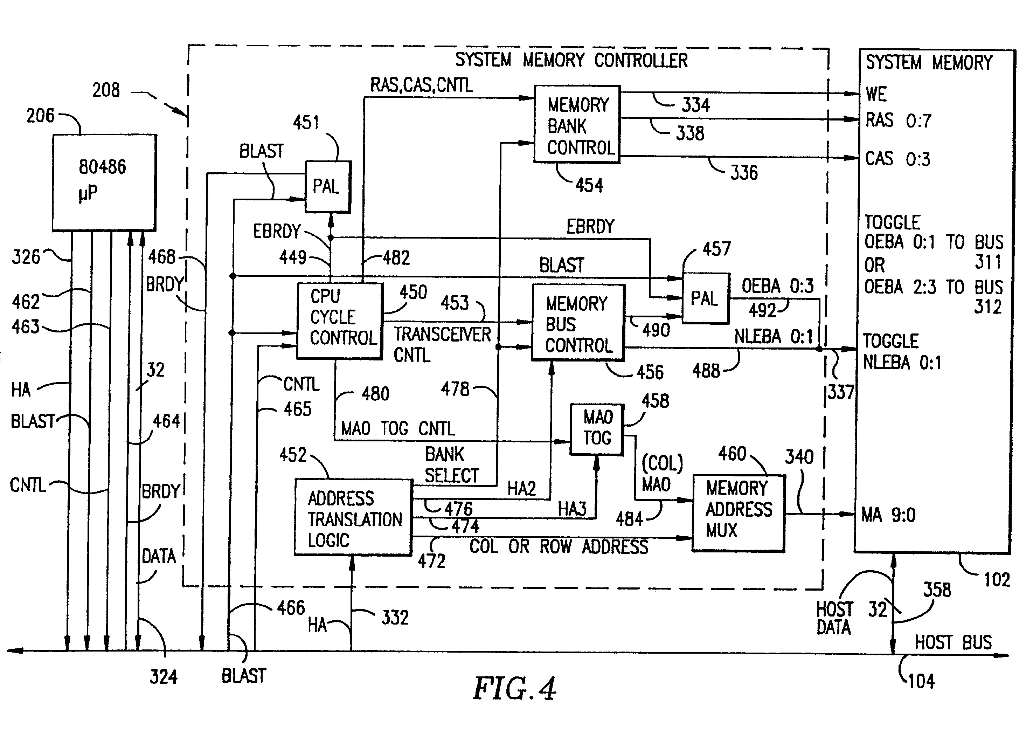

Figure 4 illustrates an embodiment of the present invention similar to the one shown in Figure 2, but with a detailed block diagram of a possible system memory controller 108. The system memory controller 108 of Figure 4 can be used to transfer dwords from the system memory 102 to the Intel 80486 microprocessor 206 at high speed in increments of 1, 2, or 4 dwords.

In the present invention, the system memory controller 108 with the exclusion of PALs 451 and 457 has been fabricated as an application-specific integrated circuit (ASIC). It should be noted, however, that any other appropriate fabrication presently known or developed in the future can be used for the system memory controller 108. Under the control of the Intel 80486 microprocessor 206, the system memory controller 108 provides the requisite addressing and control signals to the system memory 102 through buffer 310.

Referring again to Figure 3, to manipulate the system memory 102, the system memory controller 108 operating at, for example, 25 megahertz drives WE (write enable) on bus 334, CAS 0 :3 (column address strobe, lines 0 through 3) on bus 336, RAS 0 :7 (row address strobe, lines 0 through 7) on bus 338, and MA 9 :0 (memory address, lines 9 through 0) on bus 340 to the system memory 102. The system memory controller 108 further drives the OEBA 0 :3 (output enable B to A ; B to A is the read direction), OEAB 0 :1 (output enable A to B ; A to B is the write direction used during WE) and NLEBA 0 :1 (latch enable B to A) of the latching transceivers 311A, 311B, 312A, and 312B.

Worth noting is that the system memory 102 can be driven at a higher frequency clock rate than 25 Megahertz (Mhz). Future embodiments of the system memory controller 108 will operate the system memory 102 at higher frequencies, such as for example at 33 Megahertz. These future embodiments utilizing the same system memory configuration are intended to be included herein.

The data locations in the system memory 102 of Figure 3 using the system memory controller 108 as defined in Figure 4, are specified by rows (or pages) and columns. With reference to Figures 3 and 4, in order to access memory locations in system memory 102, a row address and then a column address is issued by the system memory controller 108 via bus 340 and buffer 310 to each DRAM located on each of SIMM sockets 315-322. The row address indicates the page, while the column address indicates which bytes on the page will be accessed. The row and column addresses are multiplexed over MA 9 :0 (memory address, lines 9 to 0) which connects to each DRAM. The signals on MA 9 :0 from system memory controller 108 to system memory 102 during addressing are either all column addresses or all row addresses and are latched into a particular DRAM by an appropriate RAS (row address strobe) through bus 338 and CAS (column address strobe) through bus 336.

Eight DRAM banks 0-7 (using double density DRAM modules in each SIMM socket) are connected to the SIMM sockets 317-322. DRAM banks 0-3 exclusively comprise one 64-bit system memory bus on SIMM sockets 315-318, whereas memory banks 4-7 exclusively comprise the other 64-bit system memory bus on SIMM sockets 319-322. The CAS lines are connected to the DRAM banks 0-7 as indicated in Table A below.

## Table A

| SIMM Socket | DRAM Bank # | CAS |
|:---:|:---:|:---:|
| 315 | 0,1 | 0 |
| 316 | 0,1 | 0 |
| 317 | 2,3 | 1 |
| 318 | 2,3 | 1 |
| 319 | 4,5 | 2 |
| 320 | 4,5 | 2 |
| 321 | 6,7 | 3 |
| 322 | 6,7 | 3 |

If single density DRAMs were used instead of double density, the odd numbered DRAM banks in Table A would not be present, but the system memory 102 would function in the same manner. Moreover, in the present invention each of RAS 0 :7 is connected to the corresponding DRAM bank 0-7.

In order to supply the control signals, the system memory controller 108 counts on the fact that the address sequence (HA 25 :2) for 4 dwords transmitted from the Intel 80486 microprocessor 206 operating in a burst mode is always known <u>once the first address</u> is known. With this knowledge, the system memory controller 108 can pursue any of the different sequences depending on the starting address for the first dword in the burst mode by driving address-specific control signals to system memory 102. This addressing procedure, which is discussed in detail later, enables the system memory controller 108 to commence addressing of data locations in system memory 102 after receiving an initial address from the Intel 80486 microprocessor 206 without having to wait for the subsequent addresses pertaining to subsequent dwords sought by the Intel 80486 microprocessor 206.

More specifically, during an addressing sequence from the Intel 80486 microprocessor 206 in a burst mode, a symmetry exists with regard to bits HA3 and HA2. In terms of HA 3 :2, the possible sequences that can come from the Intel 80486 microprocessor 206 in a burst mode of 4 dwords are as follows :

### Table B

| Possible Dword Sequences | HA3, HA2 | | | |
|---|---|---|---|---|
| | 1st dword | 2nd dword | 3rd dword | 4th dword |
| 1 | 0,0 | 0,1 | 1,0 | 1,1 |
| 2 | 0,1 | 0,0 | 1,1 | 1,0 |
| 3 | 1,0 | 1,1 | 0,0 | 0,1 |
| 4 | 1,1 | 1,0 | 0,1 | 0,0 |

After careful consideration of the sequences, it is apparent that HA2 changes state, or "toggles," on each dword. Moreover, HA3 toggles after the 2nd dword in any given sequence. Therefore, the control signals (OEBA 3 :0, NLEBA 1 :0) from the system memory controller 108 to the latching transceivers 311A,B and 312A,B as well as the DRAM memory addresses (MA 9 :0), can all be based on the initial states of the HA3 and HA2 bits which are known. Accordingly, the embodiment of the system memory controller 108 of Figure 4 utilizes this concept.

With reference to Figure 4, the system memory controller 108 is comprised of the following : a CPU cycle control 450, a programmable array logic (PAL) 451, an address translation logic 452, a memory bank control 454, a system memory bus control 456, a PAL 457, an MAO tog 458, and a memory address multiplexor 460. All are conventionally constructed logic circuits using ASIC technology, except PALs 451 and 457. Discrete logic could be implemented. Any configuration of logic to accomplish the function described below may be utilized.

The operation of the system memory controller 108 in conjunction with the system memory 102 during a burst mode is described below in terms of time steps T1-T10. Several events can occur during each T step. Moreover, one T step equals one clock cycle. Worth noting is that a wait state between T steps can be added to make the system more adaptable.

### TIME T1

In operation at time T1, a 32-bit host address (HA 32 :2) is sent from the Intel 80486 microprocessor 206 to the address translation logic 452 of the system memory controller 108 via bus 326, host bus 204, and bus 332. The host address is followed by an address strobe ADS sent to the CPU cycle control 450 by way of control line 463, host bus 204, and control line 465. Moreover, control signals (M/IO=1 ; D/C=0 for a code read, or else D/C=1 for a data read ; W/R=0) to indicate a system memory read are sent to the CPU cycle control 450 by the Intel 80486 microprocessor 206 through control line 463, host bus 204, and control line 465.

The address translation logic 452 serves to take HA 25 :2 (first address) from bus 332 and translate those addresses into row and column addresses (second addresses). The system memory 102 of DRAMs is broken down into pages, wherein a row address specifies the page and the column address specifies the column on a particular page.

The CPU cycle control 450 handles the communication of control signals between the Intel 80486 microprocessor 206 and the system memory controller 108. During time T1, the CPU cycle control 450 of the system memory controller 108 does not sample the BLAST control line 466 allocated to the BLAST signal (sampling during time T4 ; discussed in detail below). Accordingly, either a single dword read or a burst mode dword read of 2 or 4 dwords could subsequently follow time T1.

## TIME T2

The Intel 80486 microprocessor 206 removes the ADS from control line 463 and therefore the host bus 204 during time T2. If the Intel 80486 microprocessor 206 wishes to read more than one dword, that is, read in a burst mode, a BLAST signal on control line 462 is sent via the host bus 204 and control line 466 to the CPU cycle control 450 of the system memory controller 108. The address translation logic 452 of the system memory controller 108 consequently reads the host address from the host bus 204 via bus 332.

The address translation logic 452 selects one of the DRAM memory banks 0-7 and communicates this information to memory bank control 454 and to system memory bus control 456 through line 478. Any conventional scheme of bank selection can be utilized. Recall that memory banks 0-3 exclusively comprise one 64-bit system memory bus, whereas memory banks 4-7 exclusively comprise the other 64-bit bus. Consequently, at this point, a system memory bus (either 311 or 312 in Figure 3) has been selected due to the selection of a memory bank. This selection is maintained throughout the entire burst mode sequence of reads. Consequently, all dwords will come from the same system memory bus.

The system memory bank control 454 provides the appropriate CAS and RAS signals through respective buses 336 and 338 to the memory bank selected by the address translation logic 452. The system memory bank control 454 responds to control from the CPU cycle control 450 via line 482. Accordingly, one of CAS 0:3 is selected which enables only a pair of DRAM memory banks, as indicated in Table A. One of RAS 0 :7 on bus 338 are also enabled corresponding to the selected pair of DRAM memory banks.

Under the control of the CPU cycle control 450 through line 453, the system memory bus control 456 essentially serves to repeatedly change, or "toggle," the states of NLEBA 0 :1 and either OEBA 0 :1 or OEBA 2 :3 via bus 490, PAL 457, and bus 492. The pair NLEBA 0 :1 is toggled after the 2nd and 4th dword read, whereas the appropriate OEBA pair is toggled after each dword read.

For the 1st dword read at time T2, the system memory bus control 456 asserts in an active state both of NLEBA 1 :0. This assertion of NLEBA 1 :0 enables data to flow through the latching transceivers. However, only the pair of latching transceivers (311A,311B or 332A,332B in Figure 3) of the selected system memory bus will read data because of the RAS and CAS control signals on lines 338 and 336, respectively.

Also during time T2, a WE signal is asserted for a read state. It is driven to the DRAMs from the memory bank control 454. The signal needs to be sent prior to the CAS to implement a DRAM read function.

## TIME T3

At time T3, one of OEBA 3 :0 on bus 490 is asserted active by the system memory bus control 456, thereby eventually putting into operation only one of the latching transceivers (311A, 311B, 332A, or 332B in Figure 3). The actuation of the appropriate latching transceivers is delayed by the PAL 457 until time T4.

The decision on which latching transceiver to activate is made by the memory bus control 456 based on the state of HA2 and the bank selected which are both transmitted to the memory bus control 456 by the address translation logic 452. If HA2=0, one of OEBA 2 or OEBA 0 is asserted active, otherwise one of OEBA 3 or OEBA 1. The states of the selected pair of OEBA are permitted to change state, or "toggle," on subsequent dword reads as will be later discussed. In the preferred embodiment, the pair OEBA 1 :0 was arbitrarily selected for the initial address.

The memory bank control 454 sends the appropriate CAS and RAS through corresponding buses 336 and 338 to system memory 102 which activates one of the DRAM banks 0-7. The CAS specifies a DRAM pair (0,1 or 2,3 or 4,5 or 6,7), and the RAS indicates which bank in the pair is to be accessed.

The address translation logic 452 sends via bus 472, memory address multiplexor 460, and bus 340, an address MA 9 :0 along with the CAS and RAS to all of the system memory locations. Each transmission of MA 9 :0 on bus 340 is a column address or a row address. Recall that system memory is organized into banks with rows and columns based on HA25-HA4. Furthermore, at time T5, under the control of the CPU cycle control 450, MAO tog 458 toggles the state of the MAO bit after the two dword reads i.e., before the CAS of the 3rd dword read, thereby changing the column address contained in MA 9 :0.

A EBRDY signal is placed on line 449 by the CPU cycle control 450. The signal will ultimately reach the Intel 80486 microprocessor 206 via line 449, PAL 451, line 468, host bus 204, and line 464. After reaching the PAL 451, the EBRDY signal is referred to as a BRDY signal. The BRDY signal indicates that the system memory controller 108 is ready to supply data in a burst mode and that a valid data dword is on the host bus 204. EBRDY is latched in PAL 451 to delay the signal until valid data is actually on the host bus 204 for retrieval by the Intel 80486 microprocessor 206 at time T4. Thus, the EBRDY (or BRDY) signal is pipelined.

## TIME T4

The latched OEBA signal sent at time T3 is transmitted from the PAL 457 to the appropriate latching transceiver on bus 492. The latching transceiver outputs the 1st dword onto the host bus 204 via host data bus 358. The 1st dword is read from the half of the 64-bit memory bank where the NLEBA, OEBA, CAS, RAS, and address MA 9 :0 coincide in system memory 102.

Under the supervision of the CPU cycle control 450 through transceiver control line 453, the system memory bus control 456 toggles the OEBA pair for the next dword (2nd dword) on bus 490. The states of OEBA3 :2, or in the alternative OEBA1 :0, are toggled depending on the initial state of HA2 as previously discussed at time T2. Hence, the system memory controller 108 does not wait to sample the BLAST signal on control line 466 before issuing OEBAs for subsequent dword reads. As a result, performance is enhanced.

The Intel 80486 microprocessor 206 now receives via control line 464, host bus 204, and control line 468, the latched BRDY signal in PAL 451, which was sent one clock cycle earlier as EBRDY at T3 by the CPU cycle control 450. The Intel 80486 microprocessor 206 strobes in the 1st dword of data from the host bus 204 via bus 324.

The CPU cycle control 450 samples the BLAST line 466. If no more dwords are to be read by the Intel 80486 microprocessor 206 (the 80486 wants only 1 dword), the pending OEBA latched in the PAL 457 is terminated during time T5. Further, EBRDY from the CPU Cycle Control is deasserted on line 449.

At times T5 and T6 described below, the system memory controller 108 implements the 2nd dword burst transfer to the Intel 80486 microprocessor 206. These actions could conceivably be shortened into one clock cycle so that the 2nd dword takes only one clock to be transferred to the 80486. This would require logic changes beyond and different from having the T6 actions occurring during the second half of time T5.

## TIME T5

The Intel 80486 microprocessor 206 will assert the BLAST signal on Blast control line 462 if this is a two dword burst.

The OEBA for the second dword is transmitted from the PAL 457 on line 492 to the appropriate latching transceiver. As a result, the 2nd dword is enabled onto the host bus 204 through host data bus 358. The BRDY signal is deasserted by the PAL 451, based on the earlier deasserted EBRDY. The data could be read by the Intel 80486 microprocessor 206 at the end of time T5, but in the preferred embodiment of Figure 4, it is forced to wait until time T6 due to other requirements beyond the scope of the present invention.

System memory bus control 456 deasserts NLEBA 1 :0 on line 488 to latch 64 data bits into the same latching transceivers selected at time T2. The state of the MAO bit on line 484 is toggled by MAO tog 458 to set up the next column address for this 64-bit read. MAO tog 458 toggles MAO to its opposite logic state to fulfill the known address requirements of the 3rd and 4th dword addresses from the 80486 microprocessor 206. See Table B with the associated discussion.

A EBRDY signal on control line 449 is asserted by the CPU cycle control 450 and latched into PAL 451 in order to allow the Intel 80486 microprocessor 206 to sample the 2nd dword during time T6.

## TIME T6

The OEBA is maintained by the system memory bus control 456 at the same state as in time T5, while the EBRDY signal on control line 449 is still maintained by the CPU cycle control 450 for the 3rd dword.

The memory bank control 454 asserts the same CAS and RAS on respective lines 336 and 338 selected at time T2 in order to begin the read of the second 64 bits onto the host bus 204. The read takes place from the same bus and the same memory bank as did the first 64-bit read (1st and 2nd dword, each having 32 bits). One of the NLEBA 0 :1 on bus 488 is asserted low (if the original HA2 = 0 then NLEBA0 is asserted low, otherwise NLEBA1) to maintain the 2nd dword in the latching transceiver, while allowing the 3rd dword (from the second 64-bit read) to flow through. MAO is maintained at the toggled value (second CAS address). The OEBA pair is then toggled so that the original OEBA will be asserted again while the other OEBA of the pair is deasserted.

The Intel 80486 microprocessor 206 samples BRDY on control line 464 at the end of time T6 and strobes in the 2nd dword of data from host bus 204 through host bus 324. If the Intel 80486 microprocessor 206 removes the BLAST signal on line 462, thus indicating the desire to read only 2 dwords, the pending OEBA for the next clock are terminated at the PAL 457 (OEBA will be flushed at time T7). The pending BRDY signal is terminated at its PAL 451, and the CAS signal on bus 336 will be deasserted in the next time T7.

### TIME T7

The OEBA pair is again toggled at the PAL 457 through bus 492 pursuant to the order of the system memory bus control 456. The 3rd dword (first dword of the second 64-bit read) is enabled onto the host bus 204 through bus 358.

At this point in time in the operation of the present invention, a signal different than EBRDY, but having the identical purpose, is sent from the system memory controller 108. This signal is ultimately destined for the RDY pin on the 80486 microprocessor 206. This signal is pipelined through a PAL (not shown) and clocked in the same fashion as the EBRDY signal.

Because this signal and the EBRDY signal are identical in purpose and because only a minor design change to the EBRDY signal would be needed to implement the EBRDY signal, the discussion that follows makes reference only to the EBRDY signal.

The EBRDY signal is again asserted on line 449 by the CPU cycle control 450 for the 4th dword and latched into PAL 451. At the same time, BRDY is asserted on line 468 by PAL 451 for the 3rd dword.

The memory control bank 454 continues to assert CAS on line 336, while the MAO tog 458 on line 484 asserts MAO at the toggled value. Both NLEBA 0 :1 on line 488 are now asserted low to enable all 64 bits of the second read to flow into the latching transceivers of the selected system memory bus 311 or 312.

At this point, the OEBA pair is toggled again to enable the 4th dword to be put on the host bus 204 through bus 358 during time T8.

### TIME T8

The Intel 80486 microprocessor 206 asserts the BLAST signal on control line 462 to indicate this is the last dword it wishes to read, and strobes in the 3rd dword of data from the host bus 204 through bus 324. The CPU Cycle Control 450 deasserts EBRDY on line 449 because no new data will be returned during the next clock.

The OEBA pair toggled during time T7 causes the toggling of the signal at bus 492. Accordingly, the 4th dword (second of the 2nd two dword read) is enabled onto the host bus 204 through bus 358.

The memory bank control 454 continues to assert the CAS on line 336 while the system memory bus control 456 continues to assert NLEBA on line 488. MAO on line 484 is restored to its original value (state of initial HA3) by MAO tog 458. The OEBA signals on line 490 from the system memory bus control 456 are deasserted. BRDY on line 468 is again asserted by PAL 451 which originated from the earlier asserted EBRDY. The Intel 80486 microprocessor 206 samples the BRDY signal on line 464 at the end of time T8 and strobes in the 4th dword of data through bus 324 from the host bus 204.

### TIME T9

The Intel 80486 microprocessor 206 may begin a new cycle by asserting new address and control signals, or it may release the host bus 204 by sending appropriate control signals through control line 463.

System memory controller 108 deasserts all CAS signals on line 336 to end the read, and deasserts both NLEBA 0 :1 on line 488. The system memory controller 108 now considers the read completed.

### TIME T10

During time T10, both NLEBA 0 :1 on bus 488 are reasserted to allow data to flow through the latching transceivers in preparation for a possible new read cycle. Hence, during time T1 to time T10 the system memory controller 108 provides the necessary control signals and second addresses for the system memory 102 of Figure 3.

### III. CONCLUSION

The system memory controller 108 of the present invention provides the necessary addressing and control signals for the system memory 102. From the operational description mentioned previously, it is apparent that for 1 and 2 dword reads from the system memory 102, only one CAS access is transmitted by the system memory controller 108 to supply 32 or 64 data bits, because one CAS access will allow 64 bits to be read from the system memory 108. For 4 dword reads, two CAS accesses supply the 128 bits. Moreover, a change in the column address for the second CAS access is implemented by the MAO tog 458 of the system memory controller 108.

To further achieve high performance, if system memory controller 108 detects that a burst mode will occur (high BLAST signal from the 80486 microprocessor 206), then it assumes that a burst mode of 2 or 4 dwords is to take place. If more than a single dword transfer is to occur, a second dword access begins during the output enable time of the second dword. This access will end optimally one clock cycle after it starts if it was only a 2 dword transfer of data.

The system memory controller 108 further provides the requisite control logic for the OEBA (output enable) signals and NLEBA (latch enable) signals transmitted to the pairs of latching transceivers 311A, 311B and 312A, 312B. Significantly, it provides the control logic for toggling each latching transceiver pair on successive dword reads, thus implementing a method of the present invention. Moreover, it provides the control logic for toggling the MAO bit which produces the column address for a second CAS access. The aforementioned logic and one-path read results in a simple logic construction for the system memory controller 108 of the present invention which is characterized by a minimum number of internal states in the CPU cycle control 450 and a minimum number of control signals from the CPU cycle control 450 to the memory bus control 456. Worth noting is that flexibility is built into the burst mode transfer of data supervised by the system memory controller 108 by instituting wait states. The CPU cycle control 450 can allow a wait state to occur between T steps. This concept permits the system memory controller 108 to be adapted for use with a number of other devices requiring access to data in the system memory 102.

It should be understood that present invention is not limited to its preferred embodiments, and that the examples presented above are merely for the purposes of illustration. The scope of the present invention should therefore be interpreted by the following claims as defined by the forgoing figures and text.

## Claims

1. A system for high speed data retrieval from a system memory means (102) having a memory controller (108,208) architecture, the system for high speed data retrieval comprising :
   a microcomputer, having the system memory means (102), a processing means (106,206), a system memory controller means (108,208), and a host bus (204),
   said processing means (106,206) being in electrical communication with said system memory means (102) and with said system memory controller means (108,208) through said host bus (204), and
   said system memory controller means (108,208) being in electrical communication with said system memory means (102), and said memory controller (108,208), while in a burst mode after receiving a first address from said processing means (106,206) on said host bus (204), generates second addresses for retrieving data at storage locations to be accessed in said system memory means (102).

2. A system for high speed data retrieval from a system memory (102) having a memory controller (108,208) architecture, the system for high speed data retrieval comprising :
   a system memory means (102) in electrical communication with a system memory controller means (108,208) for addressing said system memory means (102) and for causing access to data locations of said system memory means (102) in a burst mode, and
   said system memory controller means (108,208) while in a burst mode, after receiving a first host address from a processing means (106,206), performs addressing of data locations to be accessed in said system memory means (102).

3. A microcomputing system according to claim 1 or 2, wherein said system memory means (102) comprises page mode DRAMs.

4. A microcomputing system according to claim 1 or 2, wherein said system memory means (102) comprises static column DRAMs.

5. A microcomputing system according to any of claims 1 to 4 wherein said processing means (106,206) comprises an internal cache memory.

6. A microcomputing system according to any of claims 1 to 5 wherein said system memory means (102) comprises two or more memory buses (311,312).

7. A microcomputing system according to claim 6, wherein said memory buses (311,312) have a capacity of 64 bits.

8. A microcomputing system according to claim 7 wherein said system memory means (102) comprises two 32-bit bidirectional latching transceivers (311A, 311B ; 312A, 312B) for each 64-bit bus (311,312) situated to transmit data from said each 64-bit bus (311,312) to the data input/output interface of the system memory means (102).

9. A method for high speed data retrieval from a system memory (102) of a microcomputer, comprising the following steps :
(1) providing a system memory means (102) for storing data ;
(2) providing a system memory controller means (108,208) for addressing said system memory means (102) ; and
(3) accessing data locations in said system memory means (102) in a burst mode.

10. A method for high speed data retrieval from a system memory (102) of a microcomputer, having a microprocessor (106,206), a system memory (102), a system memory controller (108,208), and a host bus (204), the method for high speed data retrieval comprising the following steps :
(1) transmitting first addresses from said microprocessor (106,206) to said system memory controller (108,208) via said host bus (204) ;
(2) accessing data locations in said system memory (102) in a burst mode by generating and transmitting second addresses from said system memory controller (108,208) to said system memory (102).

11. A method according to claim 9, wherein the generating of said second addresses is based solely on the initial address of said first addresses.

12. A method according to claim 9, including the further step of transmitting at least two dwords in a burst mode from said system memory (102) to said microprocessor (106,206) via said host bus (204).

13. A method according to claim 12, wherein the step for accessing data locations in said system memory (102) includes the following steps :
(a) selecting one of said 64-bit system memory buses (311,312),
(b) retrieving 64 data bits from said 64-bit system memory bus (311,312),
(c) electrically transmitting a first set of 32 data bits of said 64 data bits onto said 32-bit host bus (204), and
(d) electrically transmitting a second set of 32 data bits of said 64 data bits onto said 32-bit host bus (204).

FIG.1

FIG.2

EP 0 440 457 A2

FIG.3

FIG. 4